# EUROPÄISCHE PATENTSCHRIFT

(11) **EP 2 511 317 B1**
(45) Veröffentlichungstag und Bekanntmachung des Hinweises auf die Patenterteilung: **25.06.2014**
(21) Anmeldenummer: 12175623.3
(22) Anmeldetag: 18.08.2008
(51) Int. Cl.: C08G 18/81, C09D 175/16, B05D 3/06, B29C 37/00, B32B 27/40

(54) **Verfahren zum Aufbringen eines Lackes und Schichtverbund zur Verwendung in einem solchen Verfahren**
Method for applying a varnish and coating compound for use in such a method
Procédé destiné à l'application d'une laque et composite en couche pour l'utilisation dans un tel procédé

(30) Priorität: 20.08.2007 DE 102007040376
(43) Veröffentlichungstag der Anmeldung: 17.10.2012
(62) Teilanmeldung aus: 08801604.3
(73) Patentinhaber: KARL WÖRWAG LACK- UND FARBENFABRIK GMBH & CO. KG, 70435 Stuttgart (DE)
(72) Erfinder: Warta, Helge, 71245 Ditzingen (DE); Warta, Terry, 71245 Ditzingen (DE)
(74) Vertreter: Patentanwälte Ruff, Wilhelm, Beier, Dauster & Partner

(56) Entgegenhaltungen:
- EP-A2- 0 361 351
- DE-A1-102004 055 363
- DE-A1-102005 049 520

## Beschreibung

Die vorliegende Erfindung betrifft ein Verfahren zum Aufbringen eines Lackes auf ein Substrat mit Hilfe eines Schichtverbundes, der einen Träger und mindestens eine darauf aufgebrachte Lackschicht aufweist.

Aus der Automobilfertigung ist es bekannt, an Stelle konventioneller Lackierungen mehrschichtige Verbünde mit einer auf einen Träger aufgebrachten Schicht härtbaren Lackes zur Beschichtung von Karosserieteilen zu verwenden. Insbesondere sogenannte Lackfolien, bei denen es sich bei dem Träger um eine Folie handelt, sind hier zu nennen. Bei der Applikation dieser Lackfolien entsteht eine Lackierung mit einem substrat- und verfahrensunabhängigen Farbton, was das Farbqualitätsmanagement erheblich vereinfachen kann. Ein weiterer Vorteil bei der Verwendung von Lackfolien liegt darin, dass bei ihrer Applikation praktisch keine Lösungsmittelemissionen auftreten. Für den Automobilbereich geeignete Lackfolien sind beispielsweise aus der WO 00/13893 A1, der EP 361 351 A2 und der EP 0 819 520 A1 bekannt.

Aus der DE 10 2005 049520 A1 ist ein Verfahren zur Herstellung von Formteilen bekannt, bei dem man auf einer Trägerfolie ein lösemittelhaltiges oder wäßriges, pigmentiertes Beschichtungsmittel und ein radikalisch vernetzbares Beschichtungsmittel, das nach Endvernetzung eine transparente Beschichtung ergibt, aufbringt, aus dem Beschichtungsmittel eine getrocknete, aber noch nicht endvernetzte Beschichtung erzeugt, die beschichtete Trägerfolie formt und mit einem flüssigen Kunststoffmaterial hinterspritzt oder hinterschäumt und die Beschichtung - sofern noch nicht erfolgt - härtet oder nachhärtet.

Aus der DE 10 2004 055363 A1 sind Lackfolien mit einem Träger und mindestens einer auf den Träger aufgebrachten Schicht härtbaren Lackes bekannt, wobei die Schicht härtbaren Lackes ein doppelbindungshaltiges Bindemittel mit einer Doppelbindungsdichte zwischen 3 mol/kg und 6 mol/kg, einer Glasübergangstemperatur T_{g} zwischen -15 °C und 20 °C und mit einem Festkörperanteil zwischen 40 % und 100 % aufweist. Die Schicht härtbaren Lackes ist nach thermischer Trocknung nicht klebrig. Vorzugsweise ist auf der Schicht härtbaren Lackes mindestens eine entfernbare Schutzschicht, vorzugsweise eine entfernbare Schutzfolie, aufgebracht.

Der vorliegenden Erfindung lag die Aufgabe zugrunde, durch Weiterentwicklung bekannter Lackfolientechnologien neue technische Lösungen bereitzustellen, die das Lackieren von Substraten weiter vereinfachen sollen.

Zur Lösung dieser Aufgabe schlägt die Erfindung ein Verfahren gemäß Anspruch 1 vor. Bei dem Verfahren kommt ein flexibler Schichtverbund zum Einsatz, der einen Träger und mindestens eine auf den Träger aufgebrachte Lackschicht aus einem Lack umfassend eine doppelbindungshaltige, OH-funktionelle Komponente A und eine doppelbindungshaltige, NCO-funktionelle Komponente B umfasst (gegebenenfalls kann der Lack auch eine doppelbindungshaltige Komponente C umfassen, die von A und B verschieden ist). Der verwendete Schichtverbund wird im Folgenden detailliert beschrieben.

Zu den Komponenten A, B und C: Diese Komponenten weisen insbesondere die folgenden Eigenschaften auf:

### Komponente A

- Festkörperanteil zwischen 30 Gew.-% und 100 Gew.-%,
- Doppelbindungsdichte zwischen 2 val/kg und 5 val/kg, insbesondere zwischen 3 val/kg und 4 val/kg (bei einem Festkörperanteil von 100 %) und
- OH-Gehalt zwischen 4 Gew.-% und 7 Gew.-%

### Komponente B

- Festkörperanteil zwischen 30 Gew.-% und 100 Gew.-%,
- Doppelbindungsdichte zwischen 1 val/kg und 4 val/kg, insbesondere zwischen 1 val/kg und 2 val/kg (bei einem Festkörperanteil von 100 %) und
- NCO-Gehalt zwischen 4 Gew.-% und 7 Gew.-%

### Komponente C

- Glasübergangstemperatur Tg zwischen -10 °C und 20 °C, insbesondere zwischen -5 °C und 5 °C,
- Festkörperanteil zwischen 30 Gew.-% und 100 Gew.-% und
- Doppelbindungsdichte zwischen 3 mol/kg und 6 mol/kg, insbesondere zwischen 4 mol/kg und 4,5 mol/kg (bei einem Festkörperanteil von 100 %)

Die Komponente A weist bevorzugt eine Glasübergangstemperatur Tg zwischen 8 °C und 20 °C, insbesondere zwischen 12 °C und 15 °C, auf.

Die Komponente B weist bevorzugt eine Glasübergangstemperatur Tg zwischen 0 °C und 10 °C, insbesondere zwischen 3 °C und 8 °C, auf.

Jede der Komponenten kann einen Anteil Lösungsmittel aufweisen (bis zu 70 Gew.-%, s.o.). Daneben kann dem Lack noch mindestens ein zusätzliches Lösungsmittel zugesetzt sein.

Als fakultativen Bestandteil kann der Lack weiterhin ein oder mehrere Lack-Hilfsmittel, vorzugsweise eine Lack-Hilfsmittelkombination, aufweisen. Geeignete Lack-Hilfsmittel werden weiter unten noch beschrieben.

In Weiterbildung weist der Lack bevorzugt die folgende Zusammensetzung auf:
- zwischen 5 Gew.-% und 15 Gew.-% Komponente A,
- zwischen 10 Gew.-% und 45 Gew.-% Komponente B,
- zwischen 0 Gew.-% und 35 Gew.-% Komponente C,
- zwischen 0 Gew.-% und 8 Gew.-% des mindestens einen Lack-Hilfsmittels und
- zwischen 0 Gew.-% und 50 Gew.-% Lösungsmittel

Es bleibt anzumerken, dass sich die Anteile zu 100 Gew.-% ergänzen.

Bei dem mindestens einen zusätzlichen Lösungsmittel handelt es sich insbesondere um ein organisches Lösemittel. In bevorzugten Ausführungsformen umfasst es mindestens einen Ester und/oder mindestens ein Keton. Besonders geeignet sind beispielsweise Butylacetat oder Methylisobutylketon (MIBK).

Bei Komponente A handelt es sich insbesondere um ein Bindemittel auf Basis eines doppelbindungshaltigen Polyols. Bevorzugt sind doppelbindungshaltige Polyole mit einem mittleren Molekulargewicht Mn zwischen 1000 Da und 10000 Da.

Komponente B basiert bevorzugt auf einem aliphatischen Urethanacrylat. Urethanacrylate mit einem mittleren Molekulargewicht Mn zwischen 1000 Da und 10000 Da sind besonders bevorzugt.

Als Komponente C wird besonders bevorzugt ein Bindemittel auf Basis eines Urethanacrylats eingesetzt, wobei das Urethanacrylat insbesondere ein mittleres Molekulargewicht Mn zwischen 1000 Da und 3000 Da, insbesondere zwischen 1400 Da und 2000 Da, aufweist.

Bei dem oben bereits angesprochenen mindestens einen Lack-Hilfsmittel kann es sich um jedes handelsübliche Hilfsmittel handeln, das bei der Herstellung von Lacken (abgesehen von den Lackrohstoffen) üblicherweise benötigt wird, insbesondere um Hilfsmittel, die zur Einstellung und Stabilisierung der Eigenschaften von Lacken dienen. Beispiele hierfür sind Photoinitiatoren wie z. B. α-Hydroxyalkylphenone oder Acylphosphinoxide, Lichtschutzmittel wie handelsübliche UV-Absorber wie Hydroxybenzophenone, Benzotriazole, Oxalanilide und Radikalfänger wie sterisch gehinderte Amine (HALS), Oberflächenadditive wie Verlaufsmittel und Entschäumer, Emulgatoren und Netz- und Dispergiermittel.

In einigen bevorzugten Ausführungsformen kann der Lack Pigmente und/oder Füllstoffe aufweisen. Als Pigmente können sowohl anorganische als auch organische Pigmente zugesetzt sein. Als Füllstoffe kommen alle dem Fachmann bekannte entsprechende Zusätze wie z.B. Kieselgele oder Talkum in Betracht. Vorzugsweise handelt es sich bei der Schicht härtbaren Lackes aber um einen Klarlack.

Gehärtet weist der Lack eine hohe Resistenz gegenüber Chemikalien wie z. B. Schwefelsäure oder Natronlauge auf. Auch Fermente wie Pankreatin führen in der Regel nicht zu einer Schädigung der Lackoberfläche. Er ist außerordentlich bewitterungsstabil und gut geeignet für Außenanwendungen. Darüber hinaus verfügt er über hervorragende mechanische Eigenschaften, insbesondere über eine hohe Kratzbeständigkeit. Der Glanzgrad ist zwischen matt und hochglänzend beliebig einstellbar, worauf später noch eingegangen wird.

Der erwähnte Schichtverbund weist als Träger bevorzugt eine Folie, insbesondere eine einschichtige Folie oder mehrschichtige Verbundfolie auf.

Besonders bevorzugt besteht der Träger im wesentlichen aus Kunststoff, insbesondere aus Fluorpolymeren wie Ethylen-Tetrafluorethylen (ETFE), Polyethylenterephthalat, Polyolefin, Polycarbonat, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/ Polycarbonat (ASA/PC), Polyacrylat, Polystyrol, Polycarbonat/Polybutylenterephthalat (PC/PBT) und/oder Polymethylmethacrylat.

Vor dem Aufbringen der mindestens einen Lackschicht auf den Träger kann die Oberfläche des Trägers einer aktivierenden Vorbehandlung, beispielsweise einer Corona-Behandlung, unterzogen werden.

Besonders vorteilhaft kann es sein, den Träger derart auszugestalten, dass er licht- und/oder UV-durchlässig ist. Derart ausgestaltet ist es dann beispielsweise möglich, unter oder auf dem Träger liegende Schichten durch den Träger hindurch zu belichten bzw. zu bestrahlen.

Vorzugsweise wird als Träger eine Folie mit einer Dicke im Bereich zwischen 10 µm und 1500 µm, insbesondere zwischen 10 µm und 200 µm, gewählt.

In manchen Fällen kann es bevorzugt sein, dass der Träger Pigmente enthält, insbesondere farbig ist. Zusätzlich oder stattdessen kann der Träger handelsübliche Füllstoffe enthalten. In der Regel ist der Träger jedoch farblos.

Die der Lackschicht zugewandte Seite/Oberfläche des Trägers ist in der Regel entweder strukturiert oder glatt ausgebildet. Im ersteren Fall überträgt sich die Struktur des Trägers beim Aufbringen einer Lackschicht auf dieselbe, was zur Herstellung mattierter oder effektgebender Lackierungen verwendet werden kann. Hierauf wird unten noch detailliert eingegangen.

Der beschriebene Lack ist sowohl durch Strahlung als auch thermisch härtbar. In bevorzugten Ausführungsformen des Schichtverbunds ist die Lackschicht mindestens teilweise gehärtet, insbesondere thermisch vorgehärtet. Bei thermischer Härtung wird im Lack enthaltenes Lösungsmittel im Wesentlichen vollständig entfernt. Darüber hinaus vernetzt vorliegend bei thermischer Härtung die OH-funktionelle Komponente A mit der doppelbindungshaltigen, NCO-funktionellen Komponente B.

Anschließend kann eine Strahlungshärtung erfolgen, wobei als einzusetzende Strahlung insbesondere UV-Strahlung bevorzugt ist. Auch der Einsatz von Elektronen-Strahlung ist möglich.

Die Lackschicht weist vorzugsweise eine Dicke zwischen 15 µm und 80 µm auf (nach vollständiger Härtung).

In bevorzugten Ausführungsformen weist der Schichtverbund mindestens eine Schicht mit farb- und/oder effektgebenden Eigenschaften auf.

Bei dieser Schicht mit farb- und/oder effektgebenden Eigenschaften handelt es sich beispielsweise um eine Schicht aus einem Lack auf Wasserbasis. Grundsätzlich muss ein solcher geeigneter Lack, abhängig vom Verarbeitungsprozess, rakel-, gieß-, spritz- und/oder pumpfähig sein.

Besonders bevorzugt ist die mindestens eine Schicht mit farb- und/oder effektgebenden Eigenschaften eine Polyurethanschicht. Die Polyurethanschicht basiert insbesondere auf einem Bindemittel mit einem Festkörperanteil zwischen 25 Gew.-% und 55 Gew.-%.

Die farb- und/oder effektgebenden Eigenschaften können beispielsweise durch Pigmenten hervorgerufen werden. Geeignete Pigmente sind dem Fachmann bekannt.

Wie die Schicht aus dem Lack mit den Komponenten A, B und ggf. C ist in bevorzugten Ausführungsformen des Schichtverbunds auch die mindestens eine Schicht mit farb- und/oder effektgebenden Eigenschaften mindestens teilweise gehärtet, insbesondere zumindest thermisch vorgehärtet.

Die Schicht mit farb- und/oder effektgebenden Eigenschaften weist vorzugsweise eine Dicke zwischen 5 µm und 40 µm auf (nach vollständiger Härtung).

In bevorzugten Ausführungsformen weist der Schichtverbund die folgende Schichtabfolge auf:
- Träger,
- mindestens eine Lackschicht aus dem Lack mit den Komponenten A, B und ggf. C,
- mindestens eine Schicht mit farb- und/oder effektgebenden Eigenschaften.

In besonders bevorzugten Ausführungsformen weist der Schichtverbund mindestens eine Schicht mit farb- und/oder effektgebenden Eigenschaften auf, die zudem Klebe- bzw. haftvermittelnde Eigenschaften hat, bei der es sich also auch um eine Haftschicht handelt.

In einer weiteren bevorzugten Ausführungsform weist der Schichtverbund die folgende Schichtabfolge auf:
- Träger,
- mindestens eine Schicht mit farb- und/oder effektgebenden Eigenschaften und
- mindestens eine Lackschicht aus dem Lack mit den Komponenten A, B und ggf. C.

Ein solcher Schichtverbund ist insbesondere zur einseitigen Applikation vorgesehen, vorzugsweise auf der der aufgebrachten Schicht härtbaren Lackes abgewandten Seite des Trägers. Die Applikation erfolgt bevorzugt durch Verklebung oder Kaschieren aber auch durch Hinterspritzen oder Hinterschäumen.

Besonders bevorzugt ist der Schichtverbund zur vollflächigen Applikation vorgesehen, es ist aber auch eine Aufbringung auf ein Substrat mittels stellenweiser Applikation möglich

Die Lackschicht aus dem Lack mit den Komponenten A, B und ggf. C kann z.B. eine strukturierte oder eine glatte Oberfläche aufweisen. Im ersteren Fall weist sie eine matte Optik auf, im letzteren eher ein spiegelndes Erscheinungsbild.

Durch den niedrigen Tg-Wert der Komponenten eines Lackes mit den Komponenten A, B und ggf. C kann grundsätzlich eine gewisse Anfälligkeit für Verunreinigungen, insbesondere für Staub, bestehen, zumindest wenn der Lack noch ungehärtet ist. Entsprechend kann der Schichtverbund in einigen Ausführungsformen eine entfernbare Schutzschicht, vorzugsweise eine entfernbare Schutzfolie, auf der Lackschicht aus dem Lack mit den Komponenten A, B und ggf. C aufweisen.

Wie die der Lackschicht zugewandte Seite/Oberfläche des Trägers (s.o.) kann auch die der Lackschicht zugewandte Seite/Oberfläche der Schutzschicht strukturiert oder glatt ausgebildet sein. Somit können über die Schutzschicht Strukturen auf die Lackoberfläche übertragen werden. Dazu kann auf der Schutzschicht ein entsprechendes Negativ- und/oder Positivmuster aufgearbeitet sein.

Auch bei der entfernbaren Schutzschicht kann es sich sowohl um eine einschichtige als auch um eine mehrschichtige Folie handeln.

Bevorzugt handelt es sich bei der entfernbaren Schutzschicht um eine Kunststoff-Folie, insbesondere um eine Folie auf Basis von Polyestern, Polyolefinen, Polycarbonaten, Acrylnitril-Butadien-Styrol (ABS), Acryl-Styrol-Acrylnitril (ASA), Acrylnitril-Butadien-Styrol/Polycarbonat (ABS/ PC), Acryl-Styrol-Acrylnitril/Polycarbonat (ASA/PC), Polycarbonat/Polybutylenterephtalat (PC/PBT) oder anderen dem Fachmann bekannten geeigneten Kunststoffen oder Mischungen derselben. Besonders bevorzugt ist eine Schutzschicht auf Basis von Polyethylenterephtalat.

Unter Umständen ist aber auch der Einsatz von Schutzschichten aus anderen Materialien als Kunststoff wie z. B. aus Metall oder Papier, denkbar.

Vorzugsweise weist eine erfindungsgemäß verwendbare Schutzschicht eine Dicke zwischen 10 µm und 100 µm, insbesondere zwischen 20 µm und 60 µm, auf.

Wie der bereits beschriebene Träger kann in bevorzugten Ausführungsformen auch die Schutzschicht derart ausgestaltet sein, dass sie licht- und/oder UV-durchlässig ist.

Ein Lack mit den Komponenten A, B und ggf. C ist in der Regel in gehärtetem Zustand nicht mehr klebrig. Nach endgültiger UV-Härtung hat die Oberfläche eines solchen Lacks eine ausreichende Härte, so dass der hier beschriebene Schichtverbund sofort gewickelt werden kann. Der Lack hat auch in ausgehärteter Form trotz hoher Oberflächenhärte eine hohe Dehnfähigkeit und und eine hohe Flexibilität. Die hohe Flexibilität ermöglicht einen Ummantelungsprozess von Profilen mit geringen Radien. Eine Prüfmethode für das Biegeverhalten ist z.B. der Dornbiegeversuch über Dornen mit abgestuften Dorndurchmesser. Oft werden beschichtete Profile gebogen, gestreckt, oder streckgebogen. Auch der beschriebene Schichtverbund muss diesen Vorgang aushalten. Eine Methode um dieses Verhalten zu beschreiben ist die Reissdehnung beim Zugversuch. Der hier beschriebene Schichtverbund weist vorzugsweise eine Reissdehnung von ca. 50 - 80 % auf, insbesondere abhängig von Schichtdicke, Träger und Substrat.

Auch die Verwendung des Schichtverbunds zur Beschichtung eines Substrats ist von der vorliegenden Erfindung umfasst. Bei dem Substrat kann es sich beispielsweise um ein Substrat aus Kunststoff (z.B. PVC, PP, PC), Metall, Glas, Furnier, Schaum und/oder Holz handeln. Besonders bevorzugt handelt es sich bei dem Substrat um eine Fahrzeugkarosserie oder ein Teil davon oder ein Holz-, Kunststoff- oder Metallprofil für die Möbel-, Bau- oder Automobilindustrie. Auch zum Flächenkaschieren von Platten und Scheiben, insbesondere von Holzplatten für die Möbelindustrie, Fensterprofilen und Aluminiumteilen und -platten für den Fassadenbau lässt sich der Schichtverbund verwenden.

Die Lackschicht des Schichtverbunds kann sowohl vor als auch nach dem Aufbringen ausgehärtet werden.

Das Aushärten des Lackes erfolgt bevorzugt thermisch und/oder mittels Strahlung, insbesondere mittels UV-Strahlung.

Gegebenfalls wird der Lack durch den Träger hindurch bestrahlt. So ist es bevorzugt, den Träger erst nach der Aushärtung der Lackschicht abzuziehen.

Eine Strukturierung der Lackschicht kann problemlos beispielsweise mittels eines geeigneten Trägers erfolgen (s.o.).

Das erfindungsgemäße Verfahren ist gekennzeichnet durch die Schritte
- Aufbringen einer Klebstoffschicht auf das Substrat
- Trägerseitiges Aufbringen des beschriebenen Schichtverbundes auf das Substrat,
- Ggf. Abziehen einer Schutzschicht.

Diese Vorgehensweise ist insbesondere beim Flächenkaschieren von Platten und Scheiben, insbesondere von Holzplatten für die Möbelindustrie, und bei der Lackierung von Fensterprofilen bevorzugt. Die Trägerfolie wird bei dem Verfahren mit auf das Substrat transferiert und verbleibt auch dort.

Besonders bevorzugt wird für das erfindungsgemäße Verfahren ein Schichtverbund mit der Schichtabfolge
- Träger,
- mindestens eine Schicht mit farb- und/oder effektgebenden Eigenschaften und
- mindestens eine Lackschicht aus dem Lack mit den Komponenten A, B und ggf. C.
verwendet.

Die mindestens eine Lackschicht aus dem Lack mit den Komponenten A, B und ggf. C kann im Rahmen des erfindungsgemäßen Verfahrens wahlweise unstrukturiert belassen oder strukturiert werden. Die Strukturierung kann im Rahmen eines erfindungsgemäßen Verfahrens beispielsweise mittels einer geeigneten Schutzfolie erfolgen (s.o.). Daneben ist aber auch eine alternative strukturgebende Behandlung, beispielsweise mittels eines Prägepapiers oder einer Prägewalze, denkbar. Eine Einstellung des Glanzgrades kann gezielt in Abhängigkeit des Grades und der Art der Strukturierung eingestellt werden.

Weitere Merkmale der Erfindung ergeben sich aus dem Beispiel in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Beispiel

Ein Lack wurde durch Mischen der folgenden Bestandteile hergestellt:

| | |
|---|---|
| Komponente C: | 30 Gew.-% |
| Urethanacrylat Bindemittel (fest) mit Glasübergangstemperatur von 2 °C und Doppelbindungsdichte von 4 mol/kg | |
| Komponente A: | 10 Gew.-% |
| Polyol, doppelbindungshaltig, Bindemittel fest, OH-Gehalt 5,7 %, Doppelbindungsdichte von 3,5 val/kg | |
| Irgacure 184 (Photoinitiator) | 1 Gew.-% |
| Irgacure 819 (Photoinitiator) | 0,40 Gew.-% |
| Tinuvin 400 (Lichtschutzmittel) | 0,70 Gew.-% |
| Tinuvin 292 (Lichtschutzmittel) | 0,70 Gew.-% |
| Tego Glide 435 (Oberflächenadditiv) | 2 Gew.-% |
| Byk 051 (Oberflächenadditiv) | 2 Gew.-% |
| Lösemittel | 23,2 Gew.-% |
| Komponente B: | 30 Gew.-% |
| Urethanacrylat, NCO-haltig. Bindemittel fest, NCO-Gehalt 5,4 %, Doppelbindungsdichte von 1,5 val/kg | |

Die Lackzusammensetzung wurde anschließend auf eine 100 µm dicke Folie aus Polyethylenterephthalat aufgerakelt. Nach Trocknung bei Raumtemperatur und anschließender thermischer Härtung im Ofen bei 100 °C wurde 1 - 5 min bei 23 °C abgekühlt. Die Dicke der entstehenden Lackschicht betrug ca. 25 µm.

Auf ein Aluminium-Profil wurde eine dünne Polyurethan-Klebeschicht aufgebracht. Anschließend wurde die Folie aus Polyethylenterephthalat mit der darauf aufgebrachten Lackschicht lackseitig bei leichtem Druck auf das Profil aufgebracht. Nach einer UV-Härtung mit einem Hg-Kaltlichtstrahler (1000 bis 7000 mJ/cm²) ließ sich die Folie aus Polyethylenterephthalat problemlos von dem nun lackierten Aluminium-Profil abziehen.

## Patentansprüche

1. Verfahren zum Aufbringen eines Lackes auf ein Substrat, **gekennzeichnet durch** die Schritte
- Bereitstellen eines flexiblen Schichtverbundes mit einem Träger und mindestens einer auf den Träger aufgebrachten Lackschicht aus einem Lack umfassend eine doppelbindungshaltige, OH-funktionelle Komponente A und eine doppelbindungshaltige, NCO-funktionelle Komponente B,
- Aufbringen einer Klebstoffschicht auf ein Substrat und
- Trägerseitiges Aufbringen des Schichtverbundes auf das Substrat,
wobei die Lackschicht vor dem Aufbringen auf das Substrat bereits mindestens teilweise, vorzugsweise vollständig, gehärtet ist.

## Claims

1. A method of applying a surface-coating material to a substrate, **characterized by** the steps of
- providing a flexible laminate with a carrier and at least one layer of surface-coating material comprising a double-bond-containing, OH-functional component A and a double-bond-containing, NCO-functional component B, applied to the carrier,
- applying an adhesive layer to the substrate, and
- applying the laminate to the substrate on the carrier side,
wherein the layer of surface-coating material is already cured at least partially, preferably completely, prior to applying to the substrate.

## Revendications

1. Procédé pour l'application d'une peinture sur un subjectile, **caractérisé par** les étapes consistant à
- fournir un assemblage de couches flexible comportant un support et au moins une couche de peinture, appliquée sur le support, à base d'une peinture comprenant un composant A à fonction OH, contenant une double liaison, et un composant B à fonction NCO, contenant une double liaison,
- appliquer une couche d'adhésif sur un subjectile et
- appliquer, du côté support, l'assemblage de couches sur le subjectile,
la couche de peinture, avant l'application sur le subjectile, étant déjà au moins partiellement, de préférence complètement, durcie.
